# EUROPEAN PATENT APPLICATION

(11) **EP 4 112 390 A1**
(43) Date of publication of application: **04.01.2023**
(21) Application number: 20922373.4
(22) Date of filing: 28.02.2020
(51) Int. Cl.: B60R 19/40, B60R 19/26, B60R 19/20, B60R 21/0134, F16F 7/12, B62D 21/15

(54) **SYSTEM FOR THE EXPANSION OF MOTOR VEHICLE PARTS FOR IMPACT ABSORPTION IN THE EVENT OF IMMINENT COLLISION**

(71) Applicant: Mansur Castro, Gustavo, 04118080 Sao Paulo (BR)
(72) Inventor: Mansur Castro, Gustavo, 04118080 Sao Paulo (BR)
(74) Representative: Urizar Anasagasti, Jesus Maria
(86) International application number: PCT/BR2020/050061
(87) International publication number: WO 2021/168523

(57) **Abstract**

It is an expansion system (10) of parts (20) of a vehicle (VE) for reducing the impact resulting from a collision with another vehicle (VE') or any obstacles, said expansion system (10) of parts (20) of a vehicle (VE) is comprised by the association of proximity/speed readers (30) with at least one electrical trigger device (40) housed in a gas release capsule (51) that has an association with at least one hermetically-sealed extension arm (50) that, once actuated, is responsible for displacing one or more components (20) that are part of the protective fairing of the vehicle (VE), such as the front (21) and/or rear (21a) bumper, door (P) plates and/or trim pieces (22), roof (T) plates and/or trim pieces, or other components that can be displaced relative to the vehicle (VE) fairing in collisions with obstacles or other vehicle(s) (VE')

## Description

### TECHNICAL FIELD OF THE INVENTION

The present invention relates to a system for the expansion of motor vehicle parts for impact absorption in the event of imminent collision. More precisely, the system belongs to the field of vehicle safety accessories and is comprised by the association of redundant proximity readers with at least one rapid expansion device of air and/or gas or springs enabling the immediate displacement of telescopic mechanisms or similar associated with external protective parts or vehicle fairings such as, for example, bumpers, door lining plates, roof lining plate or other moving parts. The displacement of at least one of these parts in the event of an imminent collision has the primary function of absorbing the impact before the vehicle itself is struck, thus protecting the driver and other passengers.

### BACKGROUND OF THE INVENTION

In the last decades, the automobile industry in many countries has been developing technologies aimed to provide more safety to vehicle occupants in case of accidents. Therefore, automobiles are tested in laboratories before they hit the streets. The controlled accidents try to reproduce the conditions under which a car would be in a real accident - and the possible effects on the bodywork and occupants. Traffic accidents cause millions of deaths annually around the world.

Generally speaking, safety depends mainly on the driver: the vast majority of accidents are still attributed to human error. When it comes to safety, experts make a distinction. It can be active or passive. Active safety includes the so-called carriageway, which can be anything from a forest trail to a four-lane highway; it also means the engine power to perform fast overtaking. Passive safety, on the other hand, is what the car offers in the event of an accident, such as a tin cabin that protects the passengers like armor.

Accident statistics show that 60% of collisions with serious victims are frontal collisions. Of these, two out of three are partial side impacts. Because the driver, at the last moment, instinctively tries to avoid the impact by twisting the steering to the side. For this reason, in automobile construction, frontal accidents are already reasoned to be laterally displaced. In this type of crash, the shock is not equally distributed over the frontal surface, which makes the cars fit together like pieces of a jigsaw puzzle. To better distribute the blow, the engine mounts are built to withstand a greater load and thus keep the crumpling even. If the shock is too violent, the mounts must break, releasing the engine so that it does not penetrate the cabin.

One of the most vulnerable parts of the vehicle is its side panel, which comprises the doors. In the doors, the distance between the outer side and the seat occupant is extremely short: only 25 to 40 centimeters. Very short space considering the high energy involved in automobile accidents.

The mandatory use of the safety belt represents safety, both for the driver and the passenger(s), however, this measure cannot prevent the trauma that occurs from the abrupt swing of the head that can cause a spinal cord injury, because the impact on the vehicle is always abrupt.

Nowadays, the vast majority of vehicles have safety components known as 'Airbags', installed at strategic points in the vehicle cabin and associated with various sensors arranged in their strategic parts (front, rear, right side, left side). Thus, when one or more sensors are triggered, signals are sent to a control unit that, in turn, checks which sensor has been hit and thus triggers the airbag that is most appropriate. Airbags consist of air bags or inflatable air cushions. If the occupants do not wear the seat belt the air bag may lose its effectiveness, especially since the air bag's expansion is calculated to reduce head impact and whiplash, and is not intended to hold the occupants' bodies in place.

It is a constant part of the automotive industry to develop systems and mechanisms to reduce the impact caused to the integral parts of a vehicle, when resulting from a collision with obstacles or other vehicles. Numerous studies and researches are developed aiming to reduce this serious impact and one of the most recent is the installation of multiple proximity sensors that detect the imminence of a collision, acting in the braking and/or deceleration of the vehicle.

Other models under development associate the proximity sensors with one or more external airbags, usually installed in the bumpers of the vehicle, in order to avoid possible damage or at least minimize it. This safety equipment differs from the system proposed herein, in that it is restricted to external inflatable bags without any safety mechanism, bags which, in many situations may rupture due to the force of the impact, ceasing to perform the cushioning function.

As known by those skilled in the art, crash tests aim to evaluate different aspects of the vehicle. In the past, bodies were built rigid, which transmitted a greater portion of the impact of collisions to the occupants, causing them serious injury and increased risk of death. Studies have shown that greater protection would be achieved with deformable structures, capable of absorbing a portion of the impact, leading to the so-called absorption or deformation zones at the front and rear.

For cabins, however, rigidity is desirable: their structure should remain intact, with less risk of panels, columns, or other elements encroaching on the space where their occupants are. The doors should not lock in a collision, the floors should not bend. Many modern-designed cars use different strength steels in the various parts of the structure to meet the demands of each part.

As we know, there is limited space for impact absorption in high-speed frontal collisions, because after a certain degree of deformation that is considered maximum, the impact is transmitted to the occupants or the structures invade the cabin.

If cars were bigger and wider, they would certainly be safer, since there would be more space between the body and the occupants, extra space that engineers would use to create a larger programmed deformation zone in case of a collision, i.e. less deceleration, less impact to be transmitted to the interior of the vehicle, less head displacement and less whiplash, which can cause serious spinal cord injuries. The present patent consists of a way to increase the space between the beginning of the body shell and its occupants in case of an imminent collision, thus increasing the deformation zone of a vehicle.

### ANALYSIS OF THE STATE OF THE ART

To exemplify the above, a search was conducted in specialized databases, through which documents were found referring to the system of expansion of vehicle parts for impact absorption in case of imminent collision, such as in the document No. US2010140903 which deals with an external airbag system that may include a bumper cover, a cushion provided behind the bumper cover, and an inflator to generate a gas pressure to deploy the cushion, where the bumper cover moves forward through the deploying cushion.

The document No. JP2009220645 envisions that a relatively high gas pressure is provided to a bumper 'airbag' and an additional 'airbag' is deployed according to the size of the height of the pedestrian photographed by a camera. The relatively high gas pressure mode is supplied to the bumper airbag. In a "small height" mode, relatively low gas pressure is supplied to the bumper airbag and the additional airbag is not used.

Most of the documents located only present the expansion (filling) of the airbags without the use of many mechanical movements referring only as prior art and, therefore, do not present anteriority in relation to the described object, thus ensuring that it meets the legal requirements for patentability.

### OBJECTS OF THE INVENTION

It is, therefore, the object of the invention to present a system of expansion of vehicle parts in case of imminent collision in order to offer a greater impact absorption, which is understood by the association of proximity and speed readers with triggering devices that enable the linear displacement of protective parts of the vehicle such as, for example, expansion of the front and/or rear bumpers, of plates or door lining parts, or other parts that can move in relation to the vehicle fairing; the immediate and linear displacement of at least one of these parts in relation to the impending impact, has the primary function of substantially cushioning the collision or crash, protecting not only the vehicle, but also, and mainly, the driver and other passenger(s) of the vehicle.

To better understand the object of the present invention, consider a frontal collision between a vehicle equipped with such technology and another vehicle without it. The described device also aims to reduce damage to the other vehicle not carrying such technology, since it offers a 'more deformable' or 'softer' structure in the eventual collision in order to reduce the deformation caused by the impact on this vehicle, besides reducing deceleration and increasing the chances of survival to its occupants.

The objective of this patent is also to present a system to expand the vehicle parts in case of imminent collision, activated by proximity readers such as cameras, sensors, laser, radar, ultrasound, for greater impact absorption, which can be installed in any model of automotive vehicle such as cars, trucks, motorcycles, etc.

Another objective of this patent is to present a system of expansion of vehicle parts for impact absorption in case of imminence of collision whose triggering device moves horizontally and linearly, on the part that detected the imminence of impact, such as the bumper, which is mounted on the innovative device formed by a triggering apparatus associated with self-locking and self-anchoring extension arms, thus avoiding that such arms break when colliding.

The mechanism comprises the following parts:
1) Imminence of impact detection equipment that consists of ultrasonic sensors, laser, radar, and camera, among others, which aim to identify the imminence of collision and which region of the vehicle is about to be hit;
2) Active expansion mechanism - It consists of telescopic rods expandable by any type of method, but not limited only to those described herein: a) electric signal that provides pyrotechnic capsulated mechanism explosion that releases gases in a watertight pipe complex that will provide the energy to expand the telescopic rods; b) by means of contracted springs that have their lock released and their accumulated energy would allow the expansion of the telescopic rods; and c) by means of motors, and the vehicle's own engine may be used for such purpose. The active mechanism must be built with deformable materials in order to promote progressive and continuous absorption of the impact during the collision; and
3) Passive or restraining mechanism consists of self-locking telescopic or rods, that use the energy released by the active mechanism to expand. Its purpose is to provide structural resistance to the expandable complex, preventing the active mechanism from breaking or twisting during a collision. The passive mechanism must be built with deformable materials in order to promote progressive and continuous absorption of the impact during the collision. The rods that compose it are equipped with numerous locks at various points that are unidirectionally expandable, i.e., in only one direction, locking at any time when forced in the other direction (during the collision), so that even if the impact occurs before the full expansion of the active mechanism (partial expansion), its locks will activate and provide support to the absorptive complex.

### DESCRIPTION OF THE FIGURES

To complement the present description in order to obtain a better understanding of the characteristics of the present invention and in accordance with a preferential practical embodiment thereof, a set of drawings is attached to the description, where, in an exemplified, although not limiting manner, its operation has been represented:

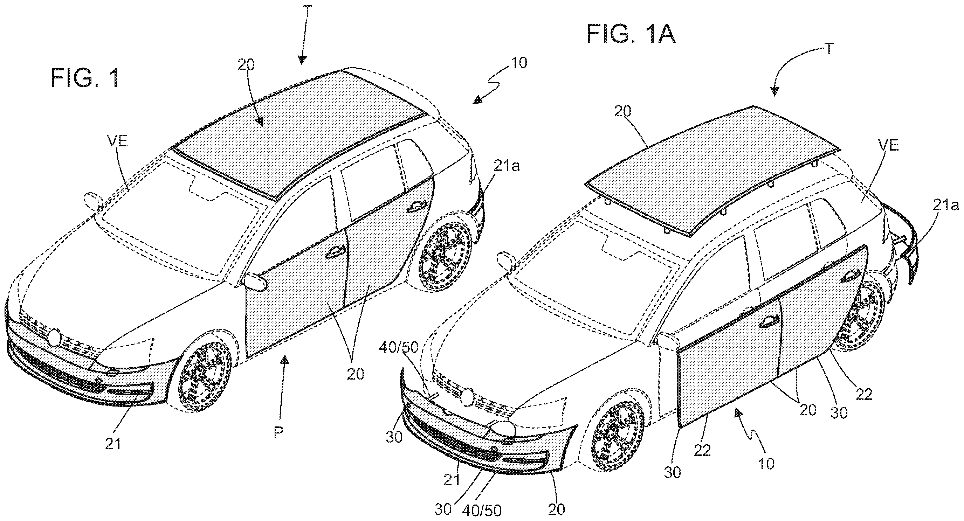

figures 1 and 1A represent perspective views of a vehicle model illustrating examples of expansive parts in resting and driven position;
figure 2 shows a side view of a vehicle in imminent collision with another vehicle;
figure 2A shows a side view of the actuating extension arms after the triggering device is actuated, illustrating the bumper expansion;
figure 3 shows a side view of a vehicle approaching a collision with another vehicle;
figure 3A shows a top view of the vehicle illustrating the bumper expansion by the extension arms in a first construction version;
figures 4 and 4A represent top views of a second and third construction version in actuated position of the extension arms to the bumper of a vehicle;
figure 5 shows the top view of a fourth construction version with 4 independent extension arms, each with its own gas capsule;
figure 5A shows a fifth construction version with 2 independent "U" shaped extending mechanisms, one in each half of the bumper, exemplifying the possibility of an eventual expansion of only one half of the bumper under specific conditions;
figure 6A represents an enlarged A.A. longitudinal section detail of the passive extension arm, illustrating a preferred locking version;
figures 6B and 6C show the A.A. longitudinal section views illustrating the movement of the locking tooth of the passive extension or retention arm;

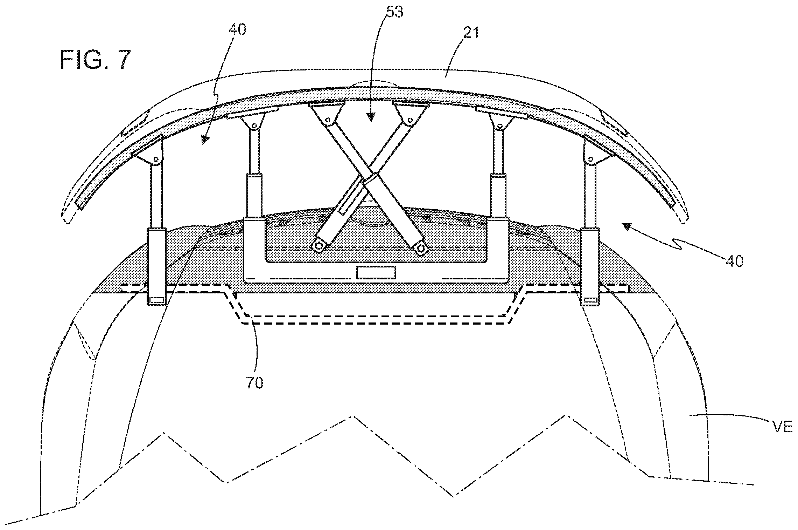

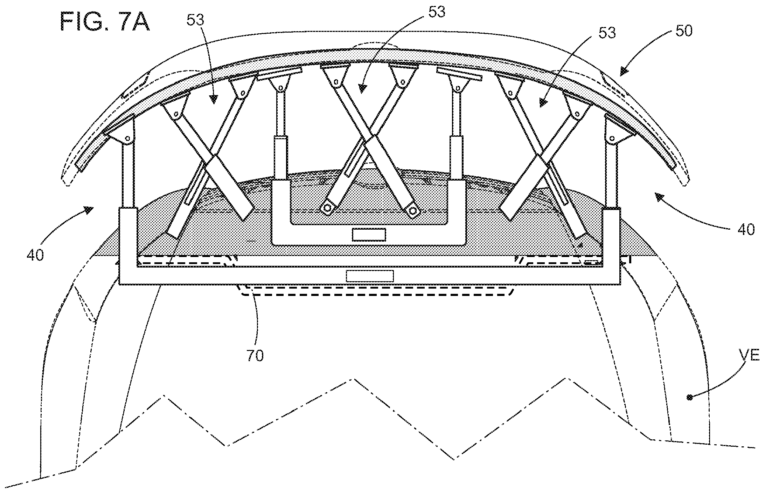

figure 7 reveals a detail of structural reinforcement in enlarged view, showing that the active expansion mechanism and the passive mechanism are supported on bars of iron or other rigid and resistant forming material;
figure 7A reveals a detail of the active and passive mechanisms in enlarged view;
figures 8 to 8B show views, illustrating the system applied on the roof of a vehicle, exemplifying their action in case of vehicle rollover.
figures 9 to 9C show views that represent examples of the system applied on at least one side door;
figure 9D shows a perspective view of a vehicle, with the system applied to the doors in lateral displacement;
figures 10 and 10A, reveal schematic views illustrating one vehicle with individual capsules on the roof and other with capsules and a pipe system to expand the entire roof;

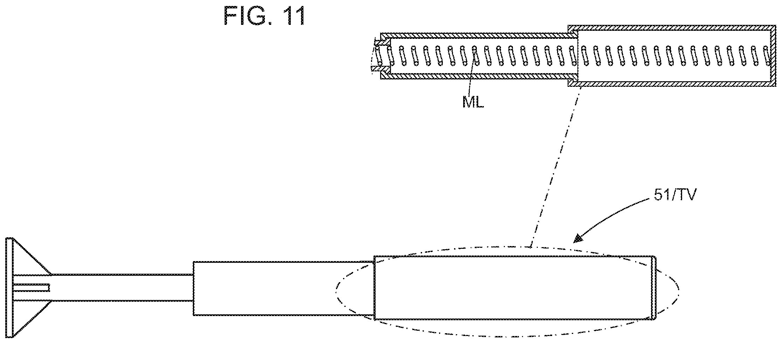

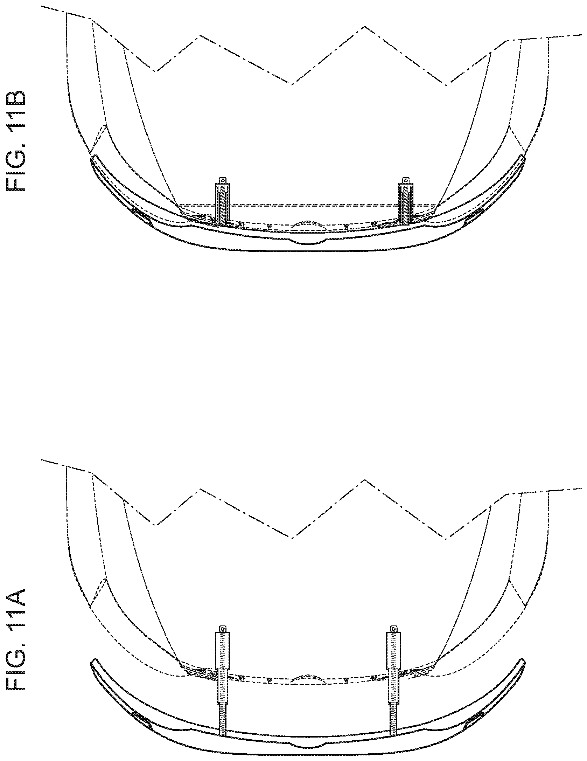

figure 11 shows an explanatory drawing illustrating an eventual expansion from contracted springs inside the cylinders and release of a latch to allow for expansion; and
figures 11A and 11B show top views of a vehicle equipped with the above-mentioned springs exemplified in the previous view, illustrating how they behave upon expansion and retraction.

### DETAILED DESCRIPTION OF THE INVENTION

With reference to the illustrated drawings, the present invention patent relates to an "SYSTEM FOR THE EXPANSION OF MOTOR VEHICLE PARTS FOR IMPACT ABSORPTION IN THE EVENT OF IMMINENT COLLISION", more precisely it is an expansion system (10) of parts (20) of a vehicle (VE) for the reduction of the impact resulting from a collision with another vehicle (VE') or any obstacles.

According to the present invention, the expansion system (10) of parts (20) of a vehicle (VE) comprises the association of proximity/speed readers (30) with at least one electric trigger device (40) housed in a capsule (51) that contains a pyrotechnic solid chemical compound that, when activated by the electric trigger, causes the immediate release of high-pressure gas, as well as, said capsule (51) has an association with at least one watertight extension arm (50) that, once activated, is responsible for displacing one or more components (20) that integrate the protective fairing of the vehicle (VE), such as the front (21) and/or rear (21a) bumper, plates and/or coating parts (22) of doors (P), plates and/or coating parts of the roof (T) or other components that can be displaced in relation to the fairing of the vehicle (VE) in order to absorb, reduce or avoid the impact force on the cabin of the vehicle (VE) when colliding or crashing into obstacles or other vehicle(s) (VE').

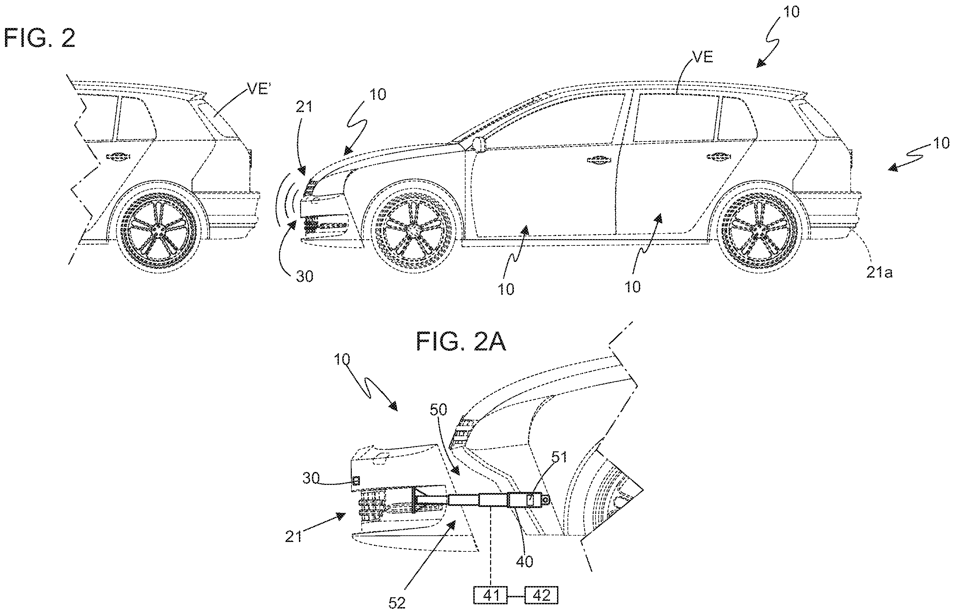

Mentioned proximity readers (30) that can be of the type sensor cameras, laser, radar, ultrasound or others that, when detecting the abrupt proximity of a vehicle (VE') or obstacle, send a signal to the triggering device (40), specifically, an electronic control unit (41) (see Figure 2 and 2A) that, in turn, sends an electrical signal to a gas generator ignitor (42) whose combustion promotes the expansion of the extension arm (50) or the release of the expansion of the springs or activation of a specific motor.

Said triggering device (40) is integrated in a capsule (51) belonging to the extension arm (50).

The expansion system (or drive mechanism) is formed by multiple front/lateral/upper/rear extenders that expand by reading of computerized camera sensors (vehicles, obstacles) and thermal devices in order to expand the complex in case of imminent impact with another vehicle or obstacle, and inhibit it in case of imminent impact with pedestrians or animals.

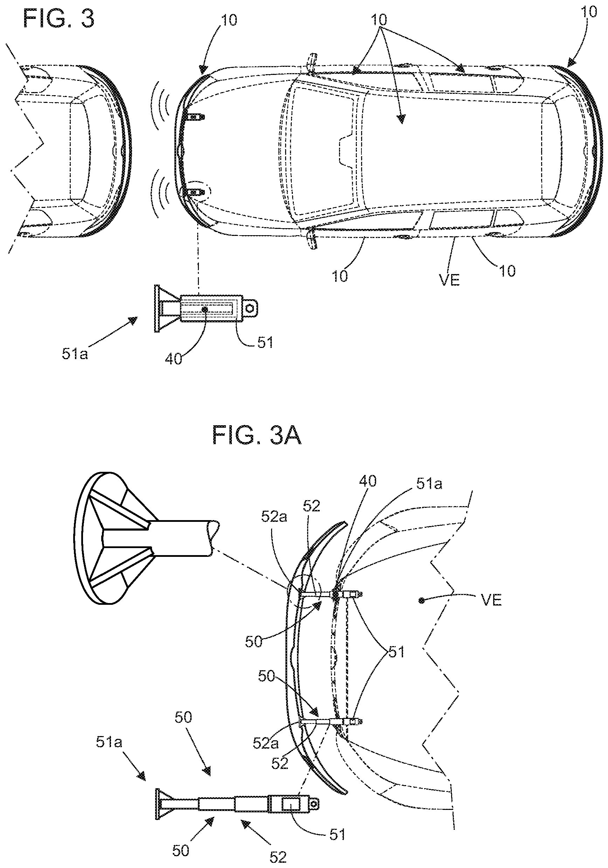

In a first constructive embodiment, the expansion system (10) envisions watertight extension arms (50) (see figures 3 and 3A) formed by a cylindrical capsule (51) for gas release where a telescopic profile (52) is installed that moves when the triggering device (40) is ignited. These extension arms have their ends (51a) and (52a) in contact with the vehicle (VE).

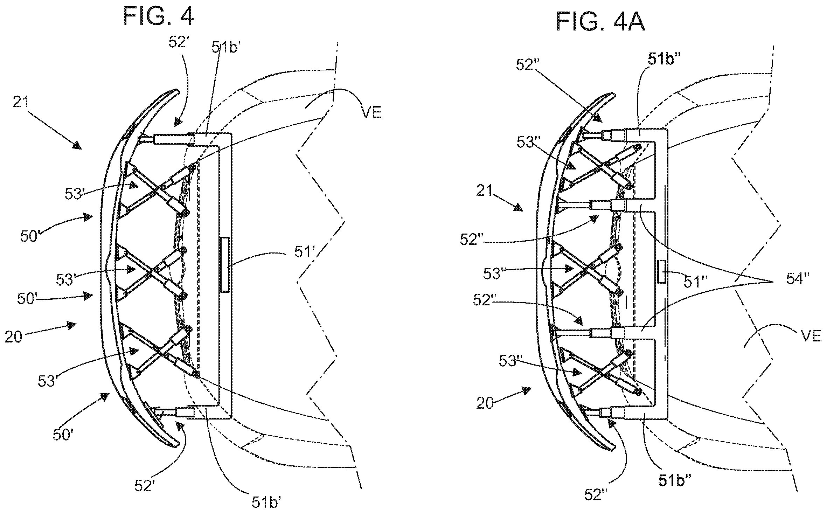

In a second constructive variation, the gas release capsule (51') (see figure 4) is comprised of 'U' shaped profile whose orthogonal end extensions (51b') are fitted with telescopic profiles (52'), in turn, with end fitted to the moving parts (20) of the vehicle (VE), as in the case of the illustration, the bumper (21). The extension arms (50') have radial reinforcements (53') or passive mechanism.

In a third constructive variation (Figure 4A), the gas release capsule (51") is comprised of a 'U' profile, with a pair of tubular branches (54") developing between the outer extensions (51b"). Both the outer extensions (51b") and the branches (54") are provided with telescopic profiles (52"), in turn with ends installed on the moving parts (20) of the vehicle (VE) as in the illustration case, the bumper (21), as well as providing passive extension arms providing structural strength (53").

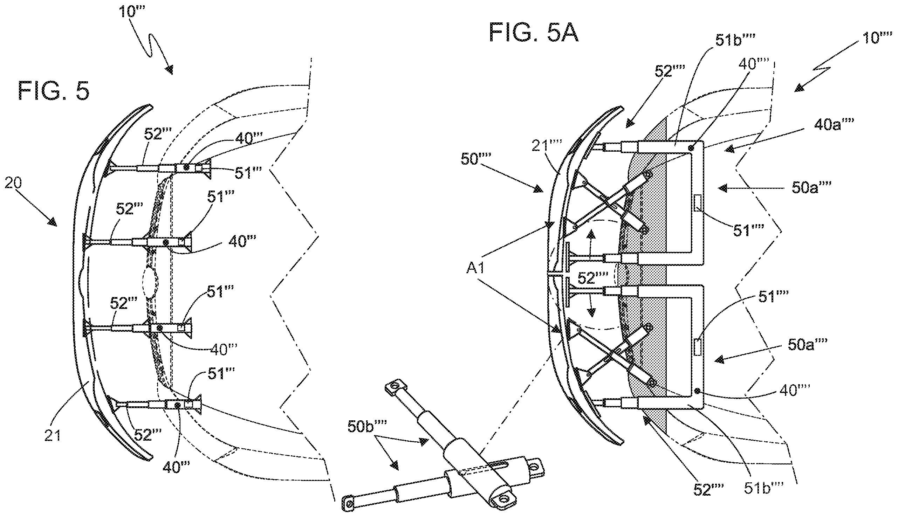

In a fourth constructive variation (see figure 5), the expander system (10‴) is provided with two or more triggering devices (40‴), each with its gas release capsule (51ʺʺ) and tubular profiles (52‴) independent of each other, arranged orthogonal to the moving part (20), in the case of the illustration a bumper (21); the triggering devices (40‴) being distributed equidistant and each equipped with its respective telescopic profile (52"").

In a fifth constructive variation (Figure 5A), the expander system (10"") provides for a pair of individual 'U' shaped firing devices (40""), each connected in a gas release capsule (51ʺʺ) on one half of the bumper and containing a passive mechanism on each side, so as to allow an eventual expansion of only half of the bumpers (21) where we can notice the passive extender arms (53""). Said firing devices (40ʺʺ) are electronically associated with another central firing device (40a"") comprising a central arm (50a"") of 'U' shape with at least one gas release capsule (51ʺʺ) and whose extensions (51bʺʺ) receive respective telescopic profiles (52""). Between the extensions (51bʺʺ) is installed a pair of individual containment mechanisms (53""), mounted crosswise to each other and anchored at pivot points (A1) and with respective secondary arms (50b"").

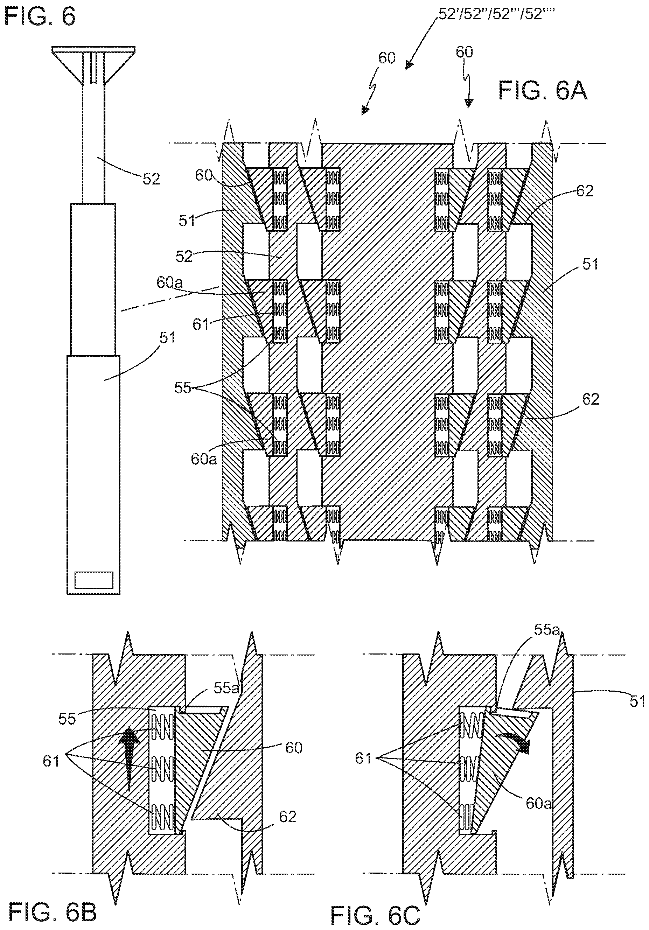

In a preferential and non-restrictive constructive embodiment, the telescopic profiles of the passive containment mechanism (52 and 53) and related ones (52')/(52")/(52‴) and (52ʺʺ) are provided with safety lock (60) anti-return after expansion (see figures 6 to 6C) of the cylindrical capsule (51), safety lock (60) which, in a preferential constructive embodiment, comprises a plurality of movable teeth (60a), of triangular shape, installed in recesses (55) practiced in the tubular profiles (52), where each recess (55) accommodates a set of springs (61) for the movement of the teeth (60a) that are contained by a projecting edge (55a). Each moving tooth (60a) engages in projections (62) provided in the telescopic tubular profiles (52) and the capsule (51) when forced in the opposite direction to the expansion, immediately locking the structure at multiple points simultaneously.

The triggering devices (40) and related devices may be attached to one or more rigid bars (70) installed in fixed parts of the vehicle (VE) for extension of the extension arms (50) provided with radial reinforcements (53) also known as passive mechanism. Preferably said bars (70) are made of iron or other material of rigid and resistant conformation.

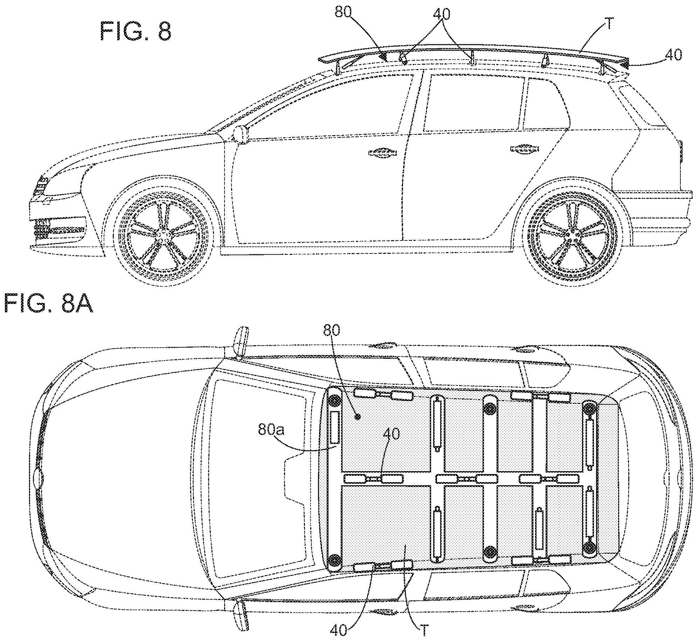

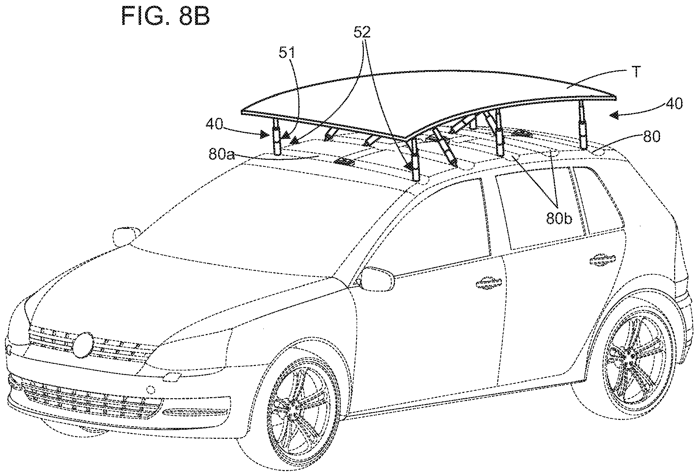

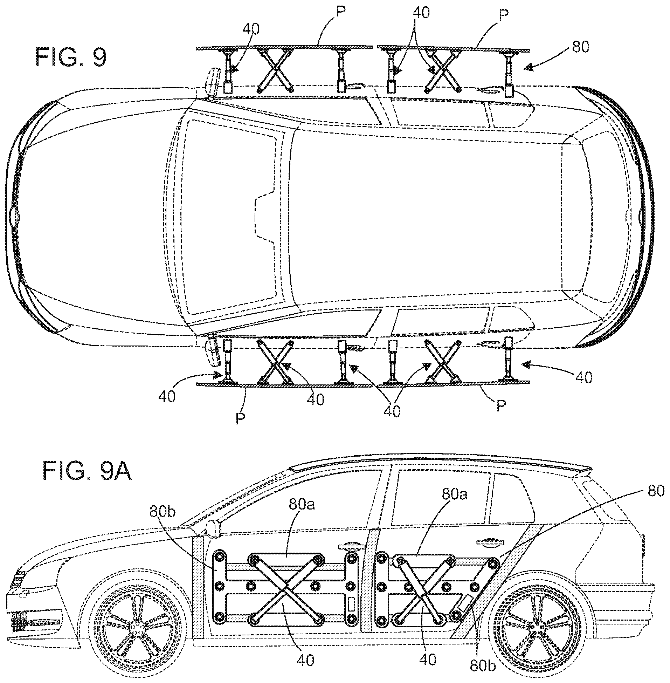

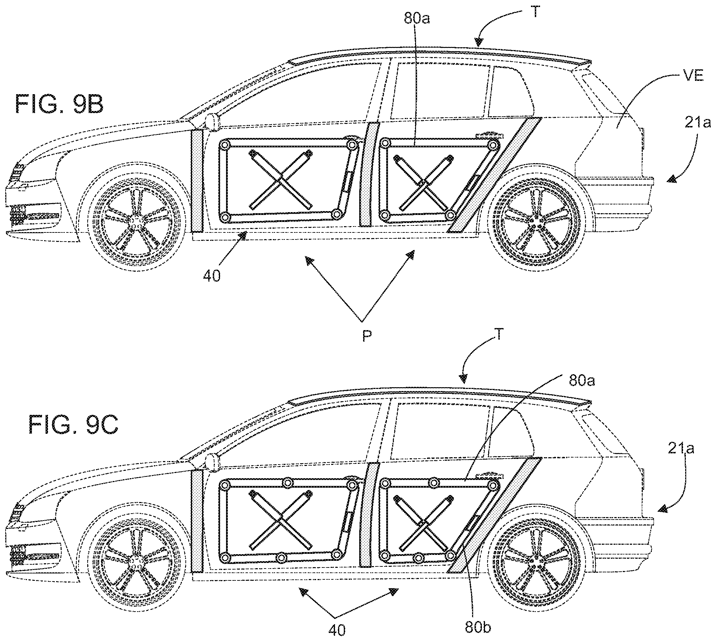

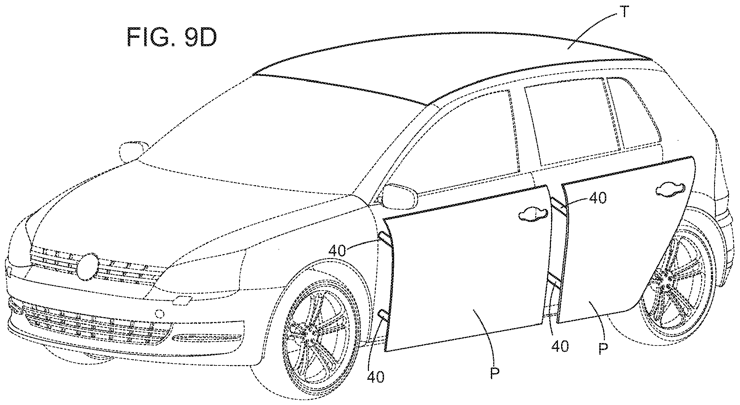

In flat areas, such as the roof (T) and side doors (P) (See Figures 8 to 9B), the triggering devices (40) are installed on a base (80), more precisely in elongated recesses that can be individual (80a) or tubular communicating with each other (80b), allowing the explosion caused by the capsule (51) to cause the simultaneous and immediate displacement of all the telescopic tubular profiles (52).

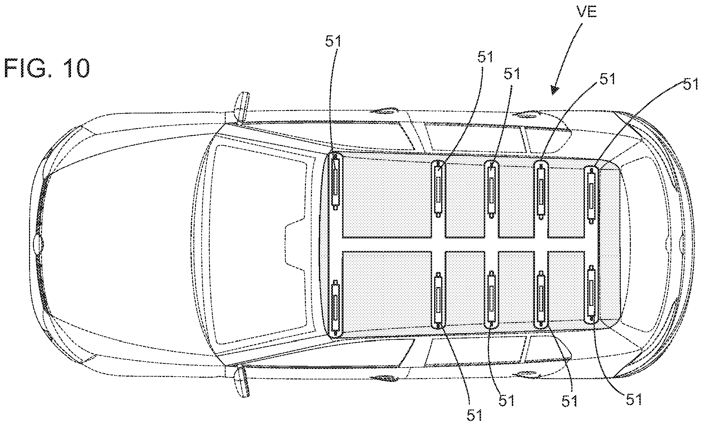

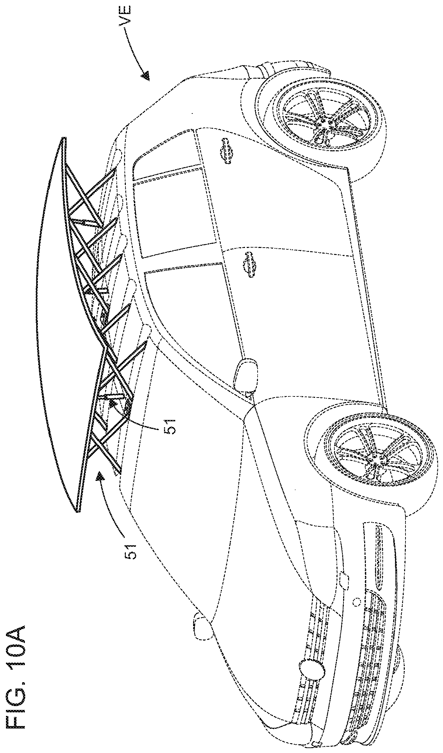

Said vehicle (VE) can provide individual capsules (51) arranged on the roof of the vehicle (see figure 10), as well as can provide said capsules (51) together with pipe systems (53) for expanding the entire roof of the vehicle (VE) (figure 10a).

Said vehicle (VE) can present expansion of the vehicle parts, using springs (ML) contracted inside the cylinders (51) in which concomitantly releases a lock (TV) to allow its expansion.

It is true that, when the present invention is put into practice, modifications may be made with respect to certain details of construction and form, without departing from the fundamental principles which are clearly substantiated in the claims, it being understood that the terminology used was not intended as a limitation.

## Claims

1. **"SYSTEM FOR THE EXPANSION OF MOTOR VEHICLE PARTS FOR IMPACT ABSORPTION IN THE EVENT OF IMMINENT COLLISION",** more precisely it is an expansion system (10) of vehicle (VE) parts (20) for the reduction of impact resulting from a collision with another vehicle (VE') or any obstacles, ***characterized* by** the expansion system (10) of parts (20) of the vehicle (VE) being comprised by the association of proximity/speed readers (30) with at least one trigger device (40) housed in a gas release capsule (51) that has an association with at least one extension arm (50) that, once actuated, is responsible for displacing one or more components (20) that integrate the vehicle (VE) protective fairing, such as the front (21) and/or rear (21a) bumper, door (P) plates and/or trim pieces (22), roof (T) plates and/or trim pieces, or other components liable to be displaced relative to the vehicle (VE) fairing in collisions with obstacles or other vehicle(s) (VE').

2. **"SYSTEM FOR THE EXPANSION OF MOTOR VEHICLE PARTS FOR IMPACT ABSORPTION IN THE EVENT OF IMMINENT COLLISION** ", according to claim 1, and in a preferred constructive version, ***characterized* by** an expansion system (10) providing extension arms (50) formed by a cylindrical capsule (51) in which a telescopic profile (52) is installed that moves when the trigger device (40) is ignited; said extension arms have ends (51a) and (52a) of contact with the vehicle (VE) provided with radial reinforcements (53).

3. **"SYSTEM FOR THE EXPANSION OF MOTOR VEHICLE PARTS FOR IMPACT ABSORPTION IN THE EVENT OF IMMINENT COLLISION** " according to claims 1 and 2, ***characterized* in that** detection of sudden proximity to a vehicle (VE') or obstacle is understood by proximity reading (30) of devices such as cameras, sensors, laser, radar, ultrasound or other which send a signal to the triggering device (40), specifically, an electronic control unit (41) for issuing an electrical signal to a gas generator ignitor (42) with optimal combustion for expansion of the extension arm (50) or the release of the expansion of the springs; said triggering device (40) is integrated in a capsule (51) belonging to the extension arm (50).

4. **"SYSTEM FOR THE EXPANSION OF MOTOR VEHICLE PARTS FOR IMPACT ABSORPTION IN THE EVENT OF IMMINENT COLLISION** " according to claim 1, ***characterized* by** trigger devices (40) and related ones being fixed on one or more rigid bars (70) installed on fixed parts of the vehicle (VE) for extension of the extension arms (50) provided with radial reinforcements (53).

5. **"SYSTEM FOR THE EXPANSION OF MOTOR VEHICLE PARTS FOR IMPACT ABSORPTION IN THE EVENT OF IMMINENT COLLISION** " according to claims 1 and in a second constructive variation ***characterized* by** the capsule (51') being comprised by a U-shaped profile in whose orthogonal extreme extensions (51b') are installed the telescopic profiles (52'), in turn, with an end installed on the moving parts (20) of the vehicle (VE) in the bumper (21); the extension arms (50') having radial reinforcements (53').

6. **"SYSTEM FOR THE EXPANSION OF MOTOR VEHICLE PARTS FOR IMPACT ABSORPTION IN THE EVENT OF IMMINENT COLLISION** ", according to claim 1 and in a third constructive variation, ***characterized* by** a capsule (51'') being comprised by U-shaped profile, and between the external extensions (51b'') a pair of tubular branches (54'') developing; both the external extensions (51b") and the branches (54") receive telescopic profiles (52"), in turn, with ends installed on the moving parts (20) of the vehicle (VE) as in the case of the illustration, the bumper (21), as well as provides for extension arms (50") provided with radial reinforcements (53").

7. **"SYSTEM FOR THE EXPANSION OF MOTOR VEHICLE PARTS FOR IMPACT ABSORPTION IN THE EVENT OF IMMINENT COLLISION** ", according to claim 1 and in a fourth constructive variation, ***characterized* by** an expander system (10"') providing two or more trigger devices (40"'), each with its own capsule (51"') and tubular profiles (52‴) independent of each other, arranged orthogonally to the moving part (20), in the case of the illustration a bumper (21); the firing devices (40‴) being equally distributed and each equipped with its own telescopic profile (52"').

8. **"SYSTEM FOR THE EXPANSION OF MOTOR VEHICLE PARTS FOR IMPACT ABSORPTION IN THE EVENT OF IMMINENT COLLISION** ", according to claim 1 and in a fifth constructive variation, ***characterized* by** an expander system (10ʺʺ) providing a pair of individual "U" shaped trigger devices (40""), each connected on one half of the bumper and containing a passive mechanism on each side, for eventual expansion of only half of the extension arms (50ʺʺ) provided with radial reinforcements (53"") and expansion of the telescopic profiles (52""); said firing devices (40"") are electronically associated with another central firing device (40a"") comprising a central arm (50a"") of 'U' shape with at least one gas release capsule (51ʺʺ) and whose extensions (51bʺʺ) receive respective telescopic profiles (52""); between the extensions (51bʺʺ) a pair of individual firing devices is installed (40b""), mounted crosswise to each other and anchored at pivot points (A1) and with respective secondary arms (50b"").

9. **"SYSTEM FOR THE EXPANSION OF MOTOR VEHICLE PARTS FOR IMPACT ABSORPTION IN THE EVENT OF IMMINENT COLLISION** " according to claims 1 to 7, ***characterized* by** telescopic profiles (52) and related (52')/(52")/(52‴) and (52"") being provided with anti-return safety lock (60) after expansion of the cylindrical capsule (51).

10. **"SYSTEM FOR THE EXPANSION OF MOTOR VEHICLE PARTS FOR IMPACT ABSORPTION IN THE EVENT OF IMMINENT COLLISION** " according to claim 8, and in a preferred constructive version, ***characterized* by** a safety latch (60), comprising a plurality of movable teeth (60a), of triangular shape, installed in recesses (55) executed in the tubular profiles (52), each recess (55) accommodating a set of springs (61) for the movement of the teeth (60a) that are contained by a projecting edge (55a); each movable tooth (60a) engages in projections (62) provided on the telescopic tubular profiles (52) and the capsule (51) when forced in opposite direction to the expansion, for immediate locking.

11. **"SYSTEM FOR THE EXPANSION OF MOTOR VEHICLE PARTS FOR IMPACT ABSORPTION IN THE EVENT OF IMMINENT COLLISION** " according to claims 1 and 2, **characterized by** the vehicle (VE) providing individual capsules (51) arranged on the roof of the vehicle which may be accompanied by a system of pipes (53) for expanding the entire roof of the vehicle (VE).

12. **"SYSTEM FOR THE EXPANSION OF MOTOR VEHICLE PARTS FOR IMPACT ABSORPTION IN THE EVENT OF IMMINENT COLLISION** " according to claims 1 and 2, ***characterized* in that** vehicle (VE) provides for expansion of vehicle parts, using springs (ML) contracted within cylinders (51) in which concomitantly releases a lock (TV) that allows expansion.
